# EUROPEAN PATENT SPECIFICATION

(11) **EP 4 543 759 B1**
(45) Date of publication and mention of the grant of the patent: **09.12.2026**
(21) Application number: 20712019.7
(22) Date of filing: 15.02.2020
(51) Int. Cl.: B64D 37/12, B64D 37/08

(54) **WING DROP FUEL TANK AND PROCESS FOR THE PRODUCTION THEREFOR**
FLÜGELIGER BRENNSTOFFTANK UND VERFAHREN ZU DESSEN HERSTELLUNG
RÉSERVOIR D'AILE LARGABLE ET SON PROCÉDÉ DE PRODUCTION

(30) Priority: 15.02.2019 IT 201900002277
(43) Date of publication of application: 30.04.2025
(73) Proprietor: M.E.RIN SRL, 00155 Rome (IT)
(72) Inventor: GIAMBARTOLOMEI, Enzo, 00155 Roma (IT)
(74) Representative: Leone, Mario
(86) International application number: PCT/IB2020/051291
(87) International publication number: WO 2020/165876

(56) References cited:
- GB-A- 630 238
- US-A- 3 101 921
- US-A- 3 409 253
- US-A- 5 054 635
- US-B1- 6 491 255

## Description

The present invention relates to a wing drop fuel tank for an aircraft or the like and, more precisely, to a wing drop fuel tank for an aircraft which comprises a rigid external protective structure and a flexible internal containment structure.

The invention further relates to the production process of the abovementioned fuel tank.

### State of the art

As it is known in aviation, a wing drop tank (generally detachable) refers to a removable auxiliary fuel tank external to the fuselage of an aircraft, positioned in a lower wing or ventral region of the aircraft. The external tank it is expendable and often therefore detachable. The use of these wing drop tanks it is typically expected to increase the range of action of aircrafts (planes, or helicopters, and both civil and military aircrafts).

In practice, the fuel contained inside the wing drop tank can be easily transferred to the main tanks.

External tanks have become commonly used on military aircrafts since the Second World War and occasionally also used on civilian aircraft, although they are only dropped in an emergency condition.

Typically, they have an aerodynamic shape and have a rigid fuel containment structure. The rigid structure it is connected to a support fixed on the wing of the aircraft. The support is called strut.

To date, external tanks for aircraft are already known which have a rigid external structure and a flexible structure inside them for the containing of liquid fuel.

For example, patent application GB630238A describes an jettisonable tank for aircraft which includes an internal flexible container / tank, external rigid sections and end covers, all assembled in groups. For the packaging and shipping therefor, the flexible container 25 of each tank it is fixed to its back section 28 and some sections are anchored to the bottom 66 and sides 67, 68 respectively of a wooden transport case.

Further, patent application US4790350A discloses a fuel tank as an auxiliary source of refuelling for aircrafts, which includes a flexible fuel storage chamber housed inside the tank, the latter being sectioned and it is designed to be manually assembled or dismantled in a short time on the field using interchangeable components designed to allow maximum efficiency. The document US6491255 B1 describes an elongated shell having front and rear portions that are joined by screws to a center structure. A crashworthy bladder carried within the shell, passes through the center structure. A mounting assembly on the upper side of the center structure, removably attaches the fuel tank to an aircraft. A removable cover permits access to the interior of the bladder.

All these solutions proposed to date, however, are extremely complex in assembly and also very heavy.

The present invention aims to solve the above highlighted disadvantages.

### BRIEF DESCRIPTION OF THE INVENTION

The object of the present invention it is to provide a wing drop tank preferably made of composite material or light alloy and which tank contains a flexible tank inside it.

According to the present invention, the construction of the tank during the production cycle it is greatly facilitated in the assembly of the same.

Hence, the present invention claims a wing drop fuel tank according to claim 1 and a process according to claim 7. Preferred embodiments of this claimed wing drop fuel tank are claimed in the dependent claims 2-6. Preferred step of this process claim is claimed in the dependent claim 8.

### DETAILED DESCRIPTION OF THE disclosure

A detailed description of a preferred embodiment of the wing drop tank of the present invention will now be provided, given as a non limiting example, and with reference to the single annexed figure, wherein the structure of the wing tank of the present invention it is schematically illustrated.

According to the invention, the wing tank comprises a rigid external casing 1, which it is made up by two rigid half-shells 10 and 11, respectively. Conveniently, the two half-shells 10 and 11 are made of a material suitable for imparting rigidity and lightness to the tank, for example such as the carbon + epoxy composite material.

Further, according to the invention, an inner flexible tank 2 it is provided which it is housed inside the two half-shells 10 and 11, said inner flexible tank 2 consists of a flexible casing, made of rubberized fabric.

Typically, the inner flexible tank 2 can in turn contain anti-explosion and anti-splashing materials, suitable for avoiding the dangers due to the presence of saturated vapours and promoting a correct location of the fuel contained therein.

On the other hand, the inner flexible tank 2 has an opening 20 delimited by a flange 21 integral with the material of the inner flexible tank 2, the flange 21 having a series of threaded holes 22 arranged along the perimeter length of the flange 21.

Furthermore, and with a construction similar to the flange 21, a second flange 23 can be provided and relevant to the fuel filling port inside the tank 2.

Similarly, at the top part of the upper half-shell 10 there is a port having same sizes as the flange 21 of the inner flexible tank 2.

The description of the production process of the wing drop tank of the present invention will now be provided.

According to the invention, it is provided that two rigid half-shells 10 and 11 are first created. Then the two half-shells 10 and 11 are mutually coupled, and their coupling creates a single rigid structure of casing 1.

Then, at the upper part of the upper half-shell 10, a first port it is obtained, said first port having same size as the size of said flange 21 of the inner flexible tank 2.

Further, a second port of same size and corresponding to the filling flange 23 of the tank 1 it is made.

Then, the inner flexible tank 2 already assembled is inserted through the opening in the first tank 1, the insertion is obtained thanks to the yielding of the flexible material which constitutes the second tank 2.

In this condition, the flange 21 and the flange 23 match with the ports at the upper half-shell 10.

Subsequently, a closure plate 12 it is applied which coincides with the flange 21, the plate 12 having clamping screws 13 which engage with the threaded holes 22 of the flange 21 therebelow.

Between the plate 12 and the internal flange 21 the connecting edge of the port at the half-shell 10 it is clamped so as to obtain a set of members that work synergistically.

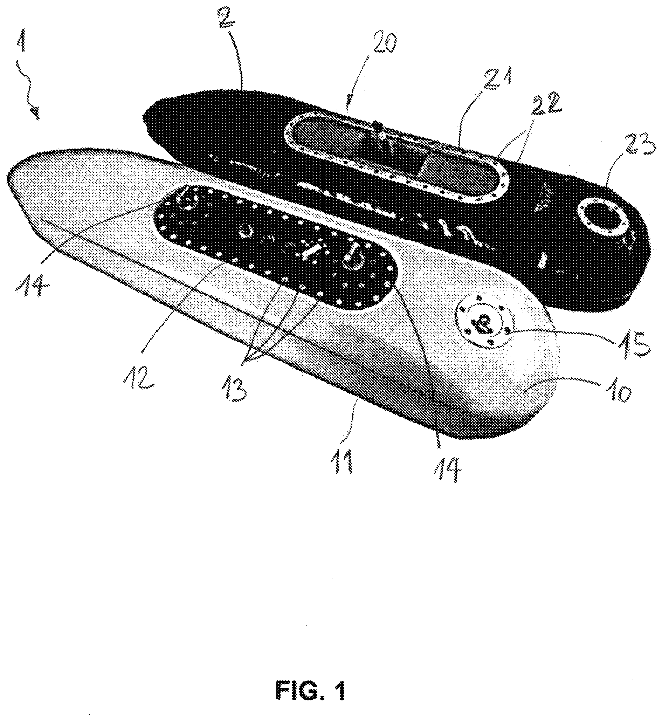

Furthermore, the seal between the flange 21 and the half-shell 10, and between the half-shell 10 and the closing plate 12 it is provided by apposition of rubber seals (the latter not shown in the figure).

Supporting means 14 can be applied to the closing plate 12 which allow the hooking of the wing drop tank 1 on the wing strut (the latter not shown in the figure).

Similar to the assembling methods of the plate 12, a filler plug 15 it is assembled on the half-shell 10.

The individual components are manufactured using traditional methods.

More precisely, the two half-shells 10 and 11 are made with the method of laminating pre-impregnated carbon fiber fabrics.

The internal tank 2 it is made and subsequently vulcanized in an autoclave as already known.

The closing plate 12 and the plug 15 are made with traditional mechanical processes.

In an alternative embodiment ,which is not part of the claimed invention, an external casing made of two half-shells is provided and an inner flexible tank is made jointly with the method of co-vulcanization, that is during the same treatment cycle in the autoclave and inside the same mould.

The present invention has several advantages.

A first advantage is given by transportability.

A second advantage is given by the fact that it provides a structure which is easy to manufacture.

A third advantage is given by the fact that it provides a structure with high stiffness and lightness.

## Claims

1. A wing drop fuel tank comprising:
* an external rigid casing (1) defining an internal volume, having a first port defining a casing opening, to access the internal volume thereof; and
* an inner flexible tank (2), made of a flexible material, arranged inside said internal volume and apt to be inserted into said rigid casing (1) through said casing opening,
the inner flexible tank (2) further comprising a first flange (21) made integral with the flexible material of said inner flexible tank (2), delimiting a flexible tank opening of the inner flexible tank (2), and having a series of threaded holes (22) arranged along a perimeter length of said first flange (21),
wherein said rigid casing (1) comprises a closure plate (12) removably locked on said casing opening by means of clamping screws (13) engaging with said threaded holes (22) of the first flange (21).

2. The wing drop fuel tank according to claim 1, wherein said rigid casing (1) comprises two rigid half-shells (10,11).

3. The wing drop fuel tank according to claim 2, wherein said two rigid half-shells (10,11) are made of a material with high stiffness and lightness, such as a carbon-epoxy composite material or the like.

4. The wing drop fuel tank according to any of the preceding claims, wherein said flexible tank (2) is made of a flexible casing made of rubberized fabric.

5. The wing drop fuel tank according to any of the preceding claims, wherein said inner flexible tank (2) comprises anti-explosion and anti-splash materials.

6. The wing drop fuel tank according to any of preceding claims 2 to 5, wherein said inner flexible tank (2) comprises a further flexible tank opening for filling the fuel into the inner flexible tank (2), the further flexible tank opening having a second flange (23) corresponding and having the same size of a second port formed in an upper half-shell (10) of said two rigid half-shells (10,11).

7. A process for the construction of a wing drop fuel tank (1), **characterized in that** it comprises the following steps:
- construction of two rigid half-shells (10,11);
- coupling of said two rigid half-shells (10,11) creating a single rigid casing (1);
- making of a first and a second port at the upper part of one of said half-shell (10) of said rigid casing (1);
- inserting of an inner flexible tank (2) of flexible material through said first port of said casing (1), said inner flexible tank (2) having a first and a second flexible tank openings delimited respectively by a first and second flanges (21,23)
- arranging said inner flexible tank (2) inside said rigid casing (1) so that said first and second flanges (21,23) match with said first and second ports at said rigid casing (1); and
- applying and locking of a closure plate (12) at said first port of said casing (1), said closure plate (12) being removably locked on said casing (1) by means of clamping screws (13) which engage with respective threaded holes (22) integrally formed on the first flange (21), said first flange (21) being integral with said inner flexible tank (2).

8. The process for the construction of a wing drop fuel tank according to claim 7, further comprising a step of interposition of a pneumatic sealing means between said first flange (21) and said half-shell (10), and between said half-shell (10) and said closure plate (12).

## Patentansprüche

1. Flügel-Abwurf-Treibstofftank, aufweisend:
* ein äußeres starres Gehäuse (1), das ein Innenvolumen begrenzt und eine erste Öffnung aufweist, die eine Gehäuseöffnung zum Zugang zu dessen Innenvolumen bildet; und
* einen inneren flexiblen Tank (2), der aus einem flexiblen Material hergestellt ist, innerhalb des Innenvolumens angeordnet ist und so ausgebildet ist, dass er durch die Gehäuseöffnung in das starre Gehäuse (1) eingeführt werden kann, wobei der innere flexible Tank (2) weiterhin einen ersten Flansch (21) aufweist, der einstückig mit dem flexiblen Material des inneren flexiblen Tanks (2) ausgebildet ist, eine flexible Tanköffnung des inneren flexiblen Tanks (2) begrenzt und eine Reihe von Gewindebohrungen (22) aufweist, die entlang einer Umfangslänge des ersten Flansches (21) angeordnet sind,
wobei das starre Gehäuse (1) eine Verschlussplatte (12) aufweist, die mittels Klemmschrauben (13), die in die Gewindebohrungen (22) des ersten Flansches (21) eingreifen, lösbar an der Gehäuseöffnung verriegelt ist.

2. Flügel-Abwurf-Treibstofftank nach Anspruch 1, wobei das starre Gehäuse (1) zwei starre Halbschalen (10, 11) aufweist.

3. Flügel-Abwurf-Treibstofftank nach Anspruch 2, wobei die beiden starren Halbschalen (10, 11) aus einem Material mit hoher Steifigkeit und geringem Gewicht hergestellt sind, wie beispielsweise einem Carbon-Epoxid-Verbundwerkstoff oder dergleichen.

4. Flügel-Abwurf-Treibstofftank nach einem der vorstehenden Ansprüche, wobei der flexible Tank (2) aus einer flexiblen Hülle aus gummiertem Gewebe gebildet ist.

5. Flügel-Abwurf-Treibstofftank nach einem der vorstehenden Ansprüche, wobei der innere flexible Tank (2) explosionshemmende und spritzhemmende Materialien aufweist.

6. Flügel-Abwurf-Treibstofftank nach einem der Ansprüche 2 bis 5, wobei der innere flexible Tank (2) eine weitere flexible Tanköffnung zum Einfüllen von Treibstoff in den inneren flexiblen Tank (2) aufweist, wobei die weitere flexible Tanköffnung einen zweiten Flansch (23) aufweist, der einer zweiten Öffnung, die in einer oberen Halbschale (10) der beiden starren Halbschalen (10, 11) ausgebildet ist, entspricht und die gleiche Größe wie diese aufweist.

7. Verfahren zur Herstellung eines Flügel-Abwurf-Treibstofftanks (1), **dadurch gekennzeichnet, dass** es die folgenden Schritte aufweist:
- Herstellen von zwei starren Halbschalen (10, 11);
- Verbinden der beiden starren Halbschalen (10, 11) zu einem einzigen starren Gehäuse (1);
- Herstellen einer ersten und einer zweiten Öffnung im oberen Teil einer der Halbschalen (10) des starren Gehäuses (1);
- Einführen eines inneren flexiblen Tanks (2) aus flexiblem Material durch die erste Öffnung des Gehäuses (1), wobei der innere flexible Tank (2) eine erste und eine zweite flexible Tanköffnung aufweist, die jeweils durch einen ersten bzw. einen zweiten Flansch (21, 23) begrenzt sind;
- Anordnen des inneren flexiblen Tanks (2) innerhalb des starren Gehäuses (1), sodass der erste und der zweite Flansch (21, 23) mit der ersten und der zweiten Öffnung des starren Gehäuses (1) übereinstimmen; und
- Anbringen und Verriegeln einer Verschlussplatte (12) an der ersten Öffnung des Gehäuses (1), wobei die Verschlussplatte (12) mittels Klemmschrauben (13), die in jeweilige, einstückig am ersten Flansch (21) ausgebildete Gewindebohrungen (22) eingreifen, lösbar am Gehäuse (1) verriegelt ist, wobei der erste Flansch (21) einstückig mit dem inneren flexiblen Tank (2) ausgebildet ist.

8. Verfahren zur Herstellung eines Flügel-Abwurf-Treibstofftanks nach Anspruch 7, das ferner einen Schritt aufweist, bei dem ein pneumatisches Dichtungsmittel zwischen dem ersten Flansch (21) und der Halbschale (10) sowie zwischen der Halbschale (10) und der Verschlussplatte (12) eingefügt wird.

## Revendications

1. Réservoir de carburant d'aile largable comprenant :
* une enveloppe rigide externe (1) définissant un volume interne, comportant un premier orifice définissant une ouverture d'enveloppe, permettant d'accéder à son volume interne ; et
* un réservoir souple interne (2), réalisé en un matériau souple, disposé à l'intérieur dudit volume interne et apte à être inséré dans ladite enveloppe rigide (1) par ladite ouverture d'enveloppe,
le réservoir souple interne (2) comprenant en outre une première bride (21) formée d'un seul tenant avec le matériau souple dudit réservoir souple interne (2), délimitant une ouverture de réservoir souple du réservoir souple interne (2), et comportant une série de trous filetés (22) disposés le long du périmètre de ladite première bride (21),
dans lequel ladite enveloppe rigide (1) comprend une plaque de fermeture (12) verrouillée de manière amovible sur ladite ouverture d'enveloppe au moyen de vis de serrage (13) s'engageant dans lesdits trous filetés (22) de la première bride (21).

2. Réservoir de carburant d'aile largable selon la revendication 1, dans lequel ladite enveloppe rigide (1) comprend deux demi-coques rigides (10, 11).

3. Réservoir de carburant d'aile largable selon la revendication 2, dans lequel lesdites deux demi-coques rigides (10, 11) sont réalisées en un matériau présentant une rigidité élevée et une grande légèreté, tel qu'un matériau composite carbone-époxy ou similaire.

4. Réservoir de carburant d'aile largable selon l'une quelconque des revendications précédentes, dans lequel ledit réservoir souple (2) est formé d'une enveloppe souple en tissu caoutchouté.

5. Réservoir de carburant d'aile largable selon l'une quelconque des revendications précédentes, dans lequel ledit réservoir souple interne (2) comprend des matériaux anti-explosion et anti-éclaboussures.

6. Réservoir de carburant d'aile largable selon l'une quelconque des revendications 2 à 5, dans lequel ledit réservoir souple interne (2) comprend une ouverture supplémentaire de réservoir souple pour le remplissage en carburant du réservoir souple interne (2), l'ouverture supplémentaire de réservoir souple comportant une seconde bride (23) correspondant à un second orifice formé dans une demi-coque supérieure (10) desdites deux demi-coques rigides (10, 11) et ayant la même taille que celui-ci.

7. Procédé de fabrication d'un réservoir de carburant d'aile largable (1), **caractérisé en ce qu'**il comprend les étapes suivantes :
- la fabrication de deux demi-coques rigides (10, 11) ;
- l'assemblage desdites deux demi-coques rigides (10, 11) pour former une seule enveloppe rigide (1) ;
- la réalisation d'un premier et d'un second orifice au niveau de la partie supérieure de l'une desdites demi-coques (10) de ladite enveloppe rigide (1) ;
- l'insertion d'un réservoir souple interne (2) en matériau souple à travers ledit premier orifice de ladite enveloppe (1), ledit réservoir souple interne (2) comportant une première et une seconde ouverture de réservoir souple délimitées respectivement par une première et une seconde bride (21, 23),
- la mise en place dudit réservoir souple interne (2) à l'intérieur de ladite enveloppe rigide (1) de manière à ce que lesdites première et seconde brides (21, 23) coïncident avec lesdits premier et second orifices au niveau de ladite enveloppe rigide (1) ; et
- la pose et le verrouillage d'une plaque de fermeture (12) au niveau dudit premier orifice de ladite enveloppe (1), ladite plaque de fermeture (12) étant verrouillée de manière amovible sur ladite enveloppe (1) au moyen de vis de serrage (13) qui s'engagent dans des trous filetés (22) respectifs formés d'un seul tenant sur la première bride (21), ladite première bride (21) étant d'un seul tenant avec ledit réservoir souple interne (2).

8. Procédé de fabrication d'un réservoir de carburant d'aile largable selon la revendication 7, comprenant en outre une étape d'interposition d'un moyen d'étanchéité pneumatique entre ladite première bride (21) et ladite demi-coque (10), et entre ladite demi-coque (10) et ladite plaque de fermeture (12).
